# EUROPEAN PATENT SPECIFICATION

(11) **EP 3 974 744 B1**
(45) Date of publication and mention of the grant of the patent: **26.04.2023**
(21) Application number: 19929840.7
(22) Date of filing: 21.05.2019
(51) Int. Cl.: F25B 1/00, F25B 13/00, F25B 47/02, F25B 49/02

(54) **AIR CONDITIONING DEVICE**
KLIMATISIERUNGSVORRICHTUNG
DISPOSITIF DE CLIMATISATION

(43) Date of publication of application: 30.03.2022
(73) Proprietor: MITSUBISHI ELECTRIC CORPORATION, Chiyoda-ku Tokyo 100-8310 (JP)
(72) Inventor: ARIYAMA, Tadashi, Tokyo 100-8310 (JP)
(74) Representative: Witte, Weller & Partner Patentanwälte mbB
(86) International application number: PCT/JP2019/020092
(87) International publication number: WO 2020/234994

(56) References cited:
- WO-A1-2015/075846
- WO-A1-2016/117126
- WO-A1-2019/053872
- WO-A1-2019/093249
- GB-A- 2 555 063
- JP-A- H0 914 802
- US-A1- 2017 370 608

## Description

### Technical Field

The present disclosure relates to an air-conditioning apparatus in which a plurality of heat source units and a use-side load are connected.

### Background Art

In the past, it has been known as a technique that in order that an air-conditioning apparatus have a larger capacity, a plurality of heat source units and a use-side load are connected by a common gas pipe and a common liquid pipe. Patent Literature 1 discloses a refrigerating and air-conditioning apparatus in which a plurality of heat source units and a plurality of use-side loads are connected by a common gas pipe and a common liquid pipe. In Patent Literature 1, in each of the heat source units, the rotation speed of a compressor, the rotation speed of a fan, the opening degree of a flow control valve is adjusted to control the circulation amount of refrigerant. By this control, in Patent Literature 1, a liquid equalization process and an excess-refrigerant process in a heat operation are executed without connecting accumulators provided in respective heat source units and each having a function of a gas-liquid separator, using a liquid equalization pipe. Furthermore, Patent Literatures 2 and 3 describe air-conditioning apparatuses that control the opening degree of a flow control valve provided in a heat source unit based on the degree of superheat of refrigerant discharged from a compressor, to perform a liquid equalization process and an excess-refrigerant process in a heat operation.

### Citation List

### Patent Literature

Patent Literature 1: Japanese Unexamined Patent Application Publication No. 11-142010
Patent Literature 2: Japanese Unexamined Patent Application Publication No. 2007-225264
Patent Literature 3: Japanese Unexamined Patent Application Publication No. 2008-249259

### Summary of Invention

### Technical Problem

The air-conditioning apparatuses described in Patent Literatures 1 to 3 perform a liquid equalization process and an excess-refrigerant process in a normal operation such as a heating operation or a cooling operation. The following description is made with respect to a transitional non-normal operation that is performed when an air-conditioning apparatus is started, the operation is switched from the heating operation to a defrosting operation, or the operation is returned from the defrosting operation to the heating operation. For example, when frost forms on a heat-source-side heat exchanger that operates as an evaporator in the heating operation, an evaporation performance of the heat-source-side heat exchanger is lowered and excess refrigerant is thus accumulated in the heat source unit. In a type of air-conditioning apparatus in which the operation is switched from a heating operation to a defrosting operation by a switching operation of a flow switching device, after the defrosting operation, liquid refrigerant accumulated in a liquid pipe ad a heat-source-side heat exchanger that has been defrosted is returned to a suction side of a compressor, and as a result, the amount of liquid refrigerant that is sucked into the compressor rapidly increases. In addition, in the case where a load rapidly changes, and a heat source unit is started and stopped repeatedly, even when a flow control valve is controlled for liquid equalization, the heat source unit is stopped before a liquid equalization control, and as a result the amount of liquid refrigerant that is sucked into the compressor increases. In such a manner, in the non-normal operation, the flow rate of refrigerant cannot be adjusted and it is hard to perform a liquid equalization process and an excess-refrigerant process among heat source units. As a result, backflow of liquid refrigerant to the compressor may occur. In order to solve such a problem, it is necessary to provide an air-conditioning apparatus capable of reducing backflow of liquid refrigerant to a compressor even in the non-normal operation. WO 2019/053872 A1 discloses a control arrangement which adjusts the opening degree of the outdoor-side expansion device based on the degree of discharge superheat of the compressor and based on the temperature of the gas-liquid two-phase refrigerant flowing through the bypass pipe in the relay unit, which represents the evaporation temperature of the indoor heat exchanger performing the cooling operation.

The present invention is applied to solve the above problem, and relates to an air-conditioning apparatus that reduces backflow of liquid refrigerant to a compressor even in a non-normal operation.

### Solution to Problem

An air-conditioning apparatus according to an embodiment of the present invention is defined in claim 1. It includes: a plurality of heat source units each including a compressor, a heat-source-side heat exchanger, a flow control valve, and an accumulator; a use-side load connected to the heat source units by pipes, and including a use-side heat exchanger that causes heat exchange to be performed between refrigerant supplied from each of the heat source units and a use-side heat medium; and a controller that controls an operation of each of the heat source units. The controller includes a determination unit and a liquid equalization unit. The determination unit determines whether or not a current operation is a non-normal operation in which the heat source units and the use-side load operate in a different manner from that in a heating operation or a cooling operation. The liquid equalization unit equalizes the amounts of liquid refrigerant that flows in the heat source units, when the determination unit determines that the current operation is the non-normal operation.

### Advantageous Effects of Invention

According to the present invention, when it is determined that the current operation is a non-normal operation, the amounts of liquid refrigerant that flows in a plurality of heat source units are equalized. As a result, uneven distribution of the liquid refrigerant to the plurality of heat source units can be prevented even in the non-normal operation. Thus, even in the non-normal operation, backflow of the liquid refrigerant to a compressor can be prevented.

### Brief Description of Drawings

[Fig. 1] Fig. 1 is a circuit diagram illustrating an air-conditioning apparatus according to Embodiment 1 of the present invention.
[Fig. 2] Fig. 2 is a block diagram illustrating a control unit of the air-conditioning apparatus according to Embodiment 1.
[Fig, 3] Fig. 3 is a circuit diagram illustrating the flow of refrigerant in a cooling only operation of the air-conditioning apparatus according to Embodiment 1.
[Fig. 4] Fig. 4 is a circuit diagram illustrating the flow of refrigerant in a heating only operation of the air-conditioning apparatus according to Embodiment 1.
[Fig. 5] Fig. 5 is a circuit diagram illustrating the flow of refrigerant in a defrosting operation of the air-conditioning apparatus according to Embodiment 1.
[Fig. 6] Fig. 6 is a flowchart indicating an operation of the control unit of the air-conditioning apparatus according to Embodiment 1.
[Fig. 7] Fig. 7 is a block diagram illustrating a control unit of an air-conditioning apparatus according to Embodiment 2.
[Fig. 8] Fig. 8 is a flowchart indicating an operation of the control unit of the air-conditioning apparatus according to Embodiment 2.
[Fig. 9] Fig. 9 is a block a block diagram illustrating a control unit of an air-conditioning apparatus according to Embodiment 3.
[Fig. 10] Fig. 10 is a flowchart indicating an operation of the control unit of the air-conditioning apparatus according to Embodiment 3.

### Description of Embodiments

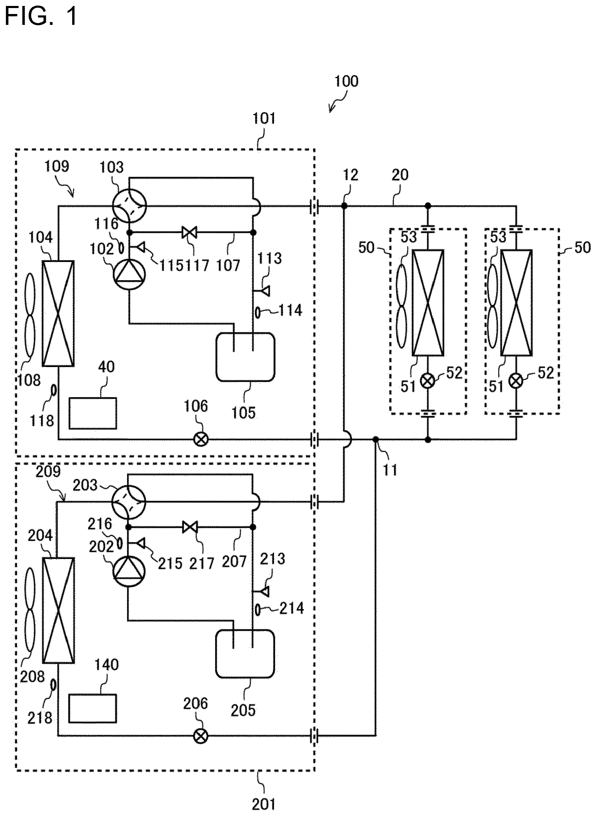

An air-conditioning apparatus according to each of embodiments will be described with reference to the drawings. It should be noted that the following descriptions concerning the embodiments are not limiting. Furthermore, in figures including Fig. 1 that will be referred to below, relationships in size between components may be different from those between actual components. In addition, in order that the embodiments be easily understood, terms related to directions, such that "upper", "lower", "right", "left", front", and "rear"), will be used as appropriate. However, these terms will be used only for explanation, that is, they are not limiting.

### Embodiment 1

Fig. 1 is a circuit diagram illustrating an air-conditioning apparatus 100 according to Embodiment 1. As illustrated in Fig. 1, the air-conditioning apparatus 100 includes, for example, two heat source units 1 and two use-side loads 50, and the two heat source units 1 and the two use-side loads 50 are connected by refrigerant pipes 20.

In the air-conditioning apparatus 100, a cooling only operation mode or a heating only operation mode is selected. In the cooling only operation mode, the two use-side loads 50 both perform a cooling operation. In the heating only operation mode, the two heat source units 1 both perform a heating operation. It should be noted that although it is described above by way of example that the two heat source units 1 are used, three or more heat source units 1 may be used. In any case, it suffices that two or more heat source units 1 are provided. Likewise, although it is described above by way of example that two use-side loads 50 are provided, one use-side load 50 may be provided or three or more use-side loads 50 may be provided. It should be noted that one of the two heat source units 1 will be referred to as a main heat source unit 101 and the other will be referred to as a sub-heat source unit 201.

### (Main Heat Source Unit 101 and Sub-Heat Source Unit 201)

The main heat source unit 101 is installed in a space other than an air-conditioned space, for example, in an outdoor space. The main heat source unit 101 includes a main compressor 102, a main flow switching device 103, a main heat-source-side heat exchanger 104, a main heat-source-side fan 108, a main flow control valve 106, and a main accumulator 105. The main heat source unit 101 also includes a main bypass pipe 107, a main bypass adjusting valve 117, a main suction temperature detection unit 114, a main suction pressure detection unit 113, a main discharge temperature detection unit 116, a main discharge pressure detection unit 115, a main heat-source-side temperature detection unit 118, and a main controller 40. The sub-heat source unit 201 is installed in a space other than an air-conditioned space, for example, in an outdoor space. The sub-heat source unit 201 includes a sub-compressor 202, a sub-flow switching device 203, a sub-heat-source-side heat exchanger 204, a sub-heat-source-side fan 208, a sub-flow control valve 206, and a sub-accumulator 205. The sub-heat source unit 201 also includes a sub-bypass pipe 207, a sub-bypass adjusting valve 217, a sub-suction temperature detection unit 214, a sub-suction pressure detection unit 213, a sub-discharge temperature detection unit 216, a sub-discharge pressure detection unit 215, a sub-heat-source-side temperature detection unit 218, and a sub-controller 140.

### (Use-Side Load 50)

The two use-side loads 50 each include a use-side expansion unit 52, a use-side heat exchanger 51, and a use-side fan 53. It should be noted that the main compressor 102, the main flow switching device 103, the main heat-source-side heat exchanger 104, the main flow control valve 106, the use-side expansion unit 52, the use-side heat exchanger 51, and the main accumulator 105 are connected by pipes to form a main refrigerant circuit 109. Similarly, the sub-compressor 202, the sub-flow switching device 203, the sub-heat-source-side heat exchanger 204, the sub-flow control valve 206, the use-side expansion unit 52, the use-side heat exchanger 51, and the sub-accumulator 205 are connected by pipes to form a sub-refrigerant circuit 209.

Regarding Embodiment 1, one of compressors 2 will be referred to as the main compressor 102, and the other will be referred to as the sub-compressor 202; one of flow switching devices 3 will be referred to as the main flow switching device 103, and the other will be referred to as the sub-flow switching device 203; one of heat-source-side heat exchangers 4 will be referred to as the main heat-source-side heat exchanger 104, and the other will be referred to as the sub-heat-source-side heat exchanger 204; one of fans 8 will be referred to as the main heat-source-side fan 108, and the other will be referred to as the sub-heat-source-side fan 208; one of flow control valves 6 will be referred to as the main flow control valve 106, and the other will be referred to as the sub-flow control valve 206; and one of accumulators 5 will be referred to as the main accumulator 105, and the other will be referred to as the sub-accumulator 205.

Furthermore, one of bypass pipes 7 will be referred to as the main bypass pipe 107, and the other will be referred to as the sub-bypass pipe 207; one of bypass adjusting valves 17 will be referred to as the main bypass adjusting valve 117, and the other will be referred to as the sub-bypass adjusting valve 217; one of suction temperature detection units 14 will be referred to as the main suction temperature detection unit 114, and the other will be referred to as the sub-suction temperature detection unit 214; one of suction pressure detection units 13 will be referred to as the main suction pressure detection unit 113, and the other will be referred to as the sub-suction pressure detection unit 213; one of discharge temperature detection units 16 will be referred to as the main discharge temperature detection unit 116, and the other will be referred to as the sub-discharge temperature detection unit 216; one of discharge pressure detection units 15 will be referred to as the main discharge pressure detection unit 115, and the other will be referred to as the sub-discharge pressure detection unit 215; and one of heat-source-side temperature detection units 18 will be referred to as the main heat-source-side temperature detection unit 118, and the other will be referred to as the sub-heat-source-side temperature detection unit 218.

### (Main Compressor 102 and Main Flow Switching Device 103)

The main compressor 102 sucks low-temperature and low-pressure refrigerant, compresses the sucked refrigerant into high-temperature and high pressure refrigerant, and discharges the high-temperature and high-pressure refrigerant. The main compressor 102 is, for example, an inverter compressor whose capacity can be controlled. It should be noted that two or more main compressors 102 having the same capacity or different capacities may be provided. The main flow switching device 103 switches the flow direction of refrigerant in the main refrigerant circuit 109 between a plurality of flow directions, and is, for example, a four-way valve. The main flow switching device 103 switches a flow passage for refrigerant discharged from the compressor 2 between a flow passage (indicated by solid lines in Fig. 1) to cause the discharged refrigerant to flow into the main heat-source-side heat exchanger 104 and a flow passage (indicated by broken lines in Fig. 1) to cause the discharged refrigerant to flow into the use-side heat exchanger 51. Since the above switching operation can be performed, the cooling operation and the heating operation can be performed.

### (Main Heat-Source-Side Heat Exchanger 104 and Main Heat-Source-Side Fan 108)

The main heat-source-side heat exchanger 104 is provided at the refrigerant pipe 20 between the main flow switching device 103 and the main flow control valve 106, and causes heat exchange to be performed between outdoor air and refrigerant. The main heat-source-side heat exchanger 104 operates as a condenser in the cooling operation, and operates as an evaporator in the heating operation. The main heat-source-side fan 108 is provided close to the main heat-source-side heat exchanger 104, and produces a flow passage in which outdoor air flows into the main heat-source-side heat exchanger 104.

### (Main Flow Control Valve 106 and Main Accumulator 105)

The main flow control valve 106 is a pressure reducing valve or an expansion valve that reduces the pressure of refrigerant to expand the refrigerant. The main flow control valve 106 is, for example, an electronic expansion valve whose opening degree is adjustable. The main accumulator 105 is provided at the refrigerant pipe 20 on a suction side of the main compressor 102, and stores liquid refrigerant of refrigerant to be sucked into the main compressor 102, whereby only gas refrigerant flows into the main compressor 102.

### (Main Bypass Pipe 107 and Main Bypass Adjusting Valve 117)

The main bypass pipe 107 connects a discharge side of the main compressor 102 and a suction side of the main accumulator 105 to provide a bypass from the discharge side of the main compressor 102 to the main accumulator 105, and allows refrigerant to flow though the bypass from the discharge side of the main compressor 102 to the main accumulator 105. The main bypass adjusting valve 117 is provided at the main bypass pipe 107, and adjusts a flow rate of refrigerant that flows in the main bypass pipe 107. The main bypass adjusting valve 117 is, for example, an on-off valve.

### (Main Suction Temperature Detection Unit 114 and Main Suction Pressure Detection Unit 113)

The main suction temperature detection unit 114 is provided at the refrigerant pipe 20 that connects the suction side of the main accumulator 105 and the main flow switching device 103, and detects a temperature of refrigerant that flows into the main accumulator 105. The main suction pressure detection unit 113 is provided at the refrigerant pipe 20 that connects the main accumulator 105 and the main flow switching device 103, and detects a pressure of low-temperature and low-pressure refrigerant to be sucked into the main accumulator 105.

### (Main Discharge Temperature Detection Unit 116 and Main Discharge Pressure Detection Unit 115)

The main discharge temperature detection unit 116 is provided at the refrigerant pipe 20 that connects the discharge side of the main compressor 102 and the main flow switching device 103, and detects a temperature of refrigerant discharged from the main compressor 102. The main discharge pressure detection unit 115 is provided at the refrigerant pipe 20 that connects the main compressor 102 and the main flow switching device 103, and detects a pressure of refrigerant discharged from the main compressor 102.

### (Main Heat-Source-Side Temperature Detection Unit 118)

The main heat-source-side temperature detection unit 118 is provided close to the main heat-source-side heat exchanger 104, and detects a temperature of refrigerant that flows into the main heat-source-side heat exchanger 104.

### (Main Controller 40)

The main controller 40 controls the main refrigerant circuit 109, and includes, for example, a microcomputer and a driver. Based on results of detection by sensors, the main controller 40 controls a frequency of the main compressor 102, a rotation speed of the main heat-source-side fan 108, a switching operation of the main flow switching device 103, an opening degree of the main flow control valve 106, etc.. The sensors are, for example, the main suction temperature detection unit 114, the main suction pressure detection unit 113, the main discharge temperature detection unit 116, the main discharge pressure detection unit 115, and the main heat-source-side temperature detection unit 118. In addition, the main controller 40 controls the frequency of the main compressor 102, the rotation speed of the main heat-source-side fan 108, the switching operation of the main flow switching device 103, the opening degree of the main flow control valve 106, etc., in response to instructions given from a remote control unit (not illustrated). By then above control, in the main refrigerant circuit 109, a cooling only operation mode or a heating only operation mode is selected, that is, the cooling only operation or the heating only operation is performed.

### (Sub-Compressor 202 and Sub-Flow Switching Device 203)

The sub-compressor 202 sucks low-temperature and low-pressure refrigerant, compresses the sucked refrigerant into high-temperature and high-pressure refrigerant, and discharges the high-temperature and high-pressure refrigerant. The sub-compressor 202 is, for example, an inverter compressor whose capacity can be controlled. It should be noted that two or more sub-compressors 202 having the same capacity or different capacities may be provided. The sub-flow switching device 203 switches the flow direction of refrigerant in the sub-refrigerant circuit 209 between a plurality of flow directions, and is, for example, a four-way valve. The sub-flow switching device 203 switches a flow passage for refrigerant discharged from the compressor 2 between a flow passage (indicated by solid lines in Fig. 1) to cause the discharged refrigerant to flow into the sub-heat-source-side heat exchanger 204 and a flow passage (indicated by broken lines in Fig. 1) to cause the refrigerant to flow into the use-side heat exchanger 51. Since this switching operation can be performed, the cooling operation and the heating operation can be performed.

### (Sub-Heat-source-Side Heat Exchanger 204 and Sub-Heat-Source-Side Fan 208)

The sub-heat-source-side heat exchanger 204 is provided at the refrigerant pipe 20 between the sub-flow switching device 203 and the sub-flow control valve 206, and causes heat exchange to be performed between outdoor air and refrigerant. The sub-heat-source-side heat exchanger 204 operates as a condenser in the cooling operation, and operates as an evaporator in the heating operation. The sub-heat-source-side fan 208 is provided close to the sub-heat-source-side heat exchanger 204, and produces a flow passage in which outdoor air flows into the sub-heat-source-side heat exchanger 204.

### (Sub-Flow Control Valve 206 and Sub-Accumulator 205)

The sub-flow control valve 206 is a pressure reducing valve or an expansion valve that reduces the pressure of refrigerant to expand the refrigerant. The sub-flow control valve 206 is, for example, an electronic expansion valve whose opening degree is adjustable. The sub-accumulator 205 is provided at the refrigerant pipe 20 on a suction side of the sub-compressor 202, and stores liquid refrigerant of refrigerant to be sucked into the sub-compressor 202, whereby only gas refrigerant flows into the sub-compressor 202.

### (Sub-Bypass Pipe 207 and Sub-Bypass Adjusting Valve 217)

The sub-bypass pipe 207 connects a discharge side of the sub-compressor 202 and a suction side of the sub-accumulator 205 to provide a bypass from the discharge side of the sub-compressor 202 to the sub-accumulator 205, and allows refrigerant to flow through the bypass from the discharge side of the sub-compressor 202 to the sub-accumulator 205. The sub-bypass adjusting valve 217 is provided at the sub-bypass pipe 207, and adjusts a flow rate of refrigerant that flows in the sub-bypass pipe 207. The sub-bypass adjusting valve 217 is, for example, an on-off valve.

### (Sub-Suction Temperature Detection Unit 214 and Sub-Suction Pressure Detection Unit 213)

The sub-suction temperature detection unit 214 is provided at the refrigerant pipe 20 that connects the suction side of the sub-accumulator 205 and the main flow switching device 203, and detects a temperature of refrigerant that flows into the sub-accumulator 205. The sub-suction pressure detection unit 213 is provided at the refrigerant pipe 20 that connects the sub-accumulator 205 and the sub-flow switching device 203, and detects a pressure of low-temperature and low-pressure refrigerant to be sucked into the sub-accumulator 205.

### (Sub-Discharge Temperature Detection Unit 216 and Sub-Discharge Pressure Detection Unit 215)

The sub-discharge temperature detection unit 216 is provided at the refrigerant pipe 20 that connects the discharge side of the sub-compressor 202 and the sub-flow switching device 203, and detects a temperature of refrigerant discharged from the sub-compressor 202. The sub-discharge pressure detection unit 215 is provided at the refrigerant pipe 20 that connects the sub-compressor 202 and the sub-flow switching device 203, and detects a pressure of refrigerant discharged from the sub-compressor 202.

### (Sub-Heat-source-side temperature detection unit 218)

The sub-heat-source-side temperature detection unit 218 is provided close to the sub-heat-source-side heat exchanger 204, and detects a temperature of refrigerant that flows into the sub-heat-source-side heat exchanger 204.

### (Sub-Controller 140)

The sub-controller 140 controls the sub-refrigerant circuit 209, and includes, for example, a microcomputer and a driver. Based on results of detection by sensors, the sub-controller 140 controls a frequency of the sub-compressor 202, a rotation speed of the sub-heat-source-side fan 208, a switching operation of the sub-flow switching device 203, an opening degree of the sub-flow control valve 206, etc. The sensors are, for example, the sub-suction temperature detection unit 214, the sub-suction pressure detection unit 213, the sub-discharge temperature detection unit 216, the sub-discharge pressure detection unit 215, and the sub-heat-source-side temperature detection unit 218. In addition, the sub-controller 140 controls the frequency of the sub-compressor 202, the rotation speed of the sub-heat-source-side fan 208, the switching operation of the sub-flow switching device 203, the opening degree of the sub-flow control valve 206, etc., based on instructions given from a remote control unit (not illustrated). By the above control, a cooling only operation mode or a heating only operation mode is selected, that is, the cooling only operation or the heating only operation is performed.

### (Use-Side Expansion Unit 52)

The use-side expansion unit 52 is connected to the refrigerant pipe 20 between the use-side heat exchanger 51 and the main flow control valve 106 and the sub-flow control valve 206, and is a pressure reducing valve or an expansion valve that reduces the pressure of refrigerant to expand the refrigerant. The use-side expansion unit 52 is, for example, an electronic expansion valve whose opening degree is adjustable.

### (Use-Side Heat Exchanger 51 and Use-Side Fan 53)

The use-side heat exchanger 51 is connected to the refrigerant pipe 20 between the use-side expansion unit 52 and the main flow switching device 103 and the sub-flow switching device 203, and causes heat exchange to be performed between refrigerant and indoor air that is an example of a use-side heat medium. The use-side heat exchanger 51 operates as an evaporator in the cooling operation, and operates as a condenser in the heating operation. The use-side fan 53 is provided close to the use-side heat exchanger 51, and produces a flow passage in which indoor air flows into the use-side heat exchanger 51. As described above, in Embodiment 1, the use-side heat exchanger 51 is used as an indoor heat exchanger.

### (Liquid-Side Junction 11 and Gas-Side Junction 12)

In the cooling operation, liquid refrigerant that flows out of the main flow control valve 106 and liquid refrigerant that flows out of the sub-flow control valve 206 join each other at a liquid-side junction 11 before reaching the use-side expansion units 52. In the heating operation, gas refrigerant that flows out of the main flow switching device 103 and gas refrigerant that flows out of the sub-flow switching device 203 join each other at a gas-side junction 12 before reaching the use-side heat exchangers 51.

### (Controller 30)

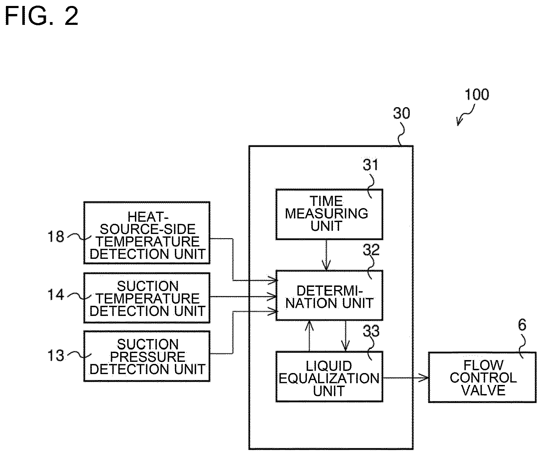

Fig. 2 is a block diagram illustrating a controller 30 of the air-conditioning apparatus 100 according to Embodiment 1. The main controller 40 and the sub-controller 140 are respective controllers 30. As described above, the controller 30 has a cooling only operation mode in which all the use-side loads 50 perform the cooling operation, and a heating only operation mode in which all the use-side loads 50 perform the heating operation. The controller 30 also has a defrosting operation mode in which the defrosting operation is performed to defrost the heat-source-side heat exchanger 4, in the case where frost forms on the heat-source-side heat exchanger 4 during the heating operation. The controller 30 may be provided in any of the main heat source unit 101, the sub-heat source unit 201, and the use-side loads 50, or may be provided at a place other than locations in the main heat source unit 101, the sub-heat source unit 201, and use-side loads 50. As illustrated in Fig. 2, the controller 30 includes a time measuring unit 31, a determination unit 32, and a liquid equalization unit 33. It should be noted that the time measuring unit 31, the determination unit 32, and the liquid equalization unit 33 are respective algorithm-based software.

### (Time Measuring Unit 31)

The time measuring unit 31 measures time for which the main heat source unit 101 or the sub-heat source unit 201 operates. Regarding Embodiment 1, although it is described that the controller 30 is software, it is not limiting. That is, the time measuring unit 31 may be hardware.

### (Determination Unit 32)

The determination unit 32 determines whether or not the current operation is a normal operation in which the main heat source unit 101, the sub-heat source unit 201, and the use-side loads 50 perform the heating operation or the cooling operation. The normal operation and a non-normal operation will be described. As described above, the normal operation is an operation in which the main heat source unit 101, the sub-heat source unit 201, and the use-side loads 50 perform the heating operation or the cooling operation. The non-normal operation is an operation other than the normal operation, that is, the state of the non-normal operation is a state in which excess or shortage of refrigerant may occur in the main heat source unit 101 and the sub-heat source unit 201 due to the flow of the refrigerant. The non-normal operation is an operation that is performed in a manner different from that in the case where the heat source units 1 and the use-side loads 50 perform the heating operation or the cooling operation. As the non-normal operation, for example, the following operations are present: a start-up operation; the heating operation before the defrosting operation; the heating operation after the defrosting operation; and an operation in which starting and stopping of the operation are repeated.

In the heating operation, an imbalance may be created between the amount of refrigerant discharged from the main heat source unit 101 or the sub-heat source unit 201 and the amount of refrigerant returned from the liquid-side junction 11 or the gas-side junction 12 to the main heat source unit 101 or the sub-heat source unit 201. In the case where such an imbalance is created, shortage of the refrigerant occurs in one of the main heat source unit 101 and the sub-heat source unit 201, and excess of the refrigerant occurs in the other heat source unit. In the case where refrigerant that flows out of the use-side heat exchanger 51 returns to the main heat source unit 101 and the sub-heat source unit 201 in the heating operation, at the liquid-side junction 11, the refrigerant is made to branch off to flow into the main heat source unit 101 and the sub-heat source unit 201. At this time, it is preferable that the ratio between the amount of the refrigerant that flows into the main heat source unit 101 and the amount of the refrigerant that flows into the sub-heat source unit 201 be proper such that the amount of refrigerant to be discharged from the main compressor 102 and the amount of refrigerant to be discharged from the sub-compressor 202 are proper. However, a proper amount of refrigerant is related to a pressure loss in the refrigerant pipe 20. That is, the proper amount of refrigerant depends on the flow rates of refrigerant in the main compressor 102 and the sub-compressor 202 and the diameter and the length of each of related pipes.

The following description is made with respect to the case where, for example, referring to Fig. 1, the diameter of the refrigerant pipe 20 from the liquid-side junction 11 to the main heat-source-side heat exchanger 104 is larger than the diameter of the refrigerant pipe 20 from the liquid-side junction 11 to the sub-heat exchanger. In this case, when the amount of refrigerant that flows into the main heat source unit 101 is the same as the amount of refrigerant that flows into the sub-heat source unit 201, the pressure loss in the main heat source unit 101 is smaller than that in the sub-heat source unit 201. As a result, the flow rate of the refrigerant that flows into the main heat source unit 101 is higher than that that in the sub-heat source unit 201. Therefore, the amount of two-phase gas-liquid refrigerant that flows into the main heat-source-side heat exchanger 104 increases, as a result of which there is a possibility that the amount of liquid refrigerant that remains without evaporating in the main heat-source-side heat exchanger 104 will increase.

In addition, because in the main heat-source-side heat exchanger 104 in which the pressure loss is small, a pressure reduction for the liquid-side junction is small, an evaporation temperature at the main heat-source-side heat exchanger 104, which operates as an evaporator, rises to a high level. When the evaporation temperature is high, a temperature difference between refrigerant and air or water, which is a medium that exchanges heat with the refrigerant, decreases, and the evaporation performance of the main heat-source-side heat exchanger 104 lowers. Therefore, the evaporation amount of two-phase gas-liquid refrigerant decreases and the quality of the refrigerant that flows out of the main heat-source-side heat exchanger 104 easily decreases. In this case, in an air cooling system, the medium that exchanges heat with the refrigerant is air, and in a water cooling system, the medium that exchanges heat with the refrigerant is water or similar liquid.

Thus, when the amount of liquid refrigerant that remains without evaporating exceeds the amount of refrigerant that returns to the main compressor 102, the amount of surplus refrigerant in the main accumulator 105 increases. It is assumed that the operation outputs of the main compressor 102 and the main heat-source-side heat exchanger 104 included in the main heat source unit 101 are different from the operation outputs of the sub-compressor 202 and the sub-heat-source-side heat exchanger 204 included in the sub-heat source unit 201. In this case, the pipe from the liquid-side junction 11 to the main heat-source-side heat exchanger 104 and the pipe from the liquid-side junction 11 to the sub-heat-source-side heat exchanger 204 have different diameters.

When frost forms on the heat-source-side heat exchanger 4 in the heating operation, and the defrosting operation is performed, the evaporation performance of the use-side heat exchanger 51, which operates as an evaporator, is lowered and liquid refrigerant that flows into the use-side heat exchanger 51 becomes harder to evaporate. Furthermore, when the heating operation is resumed after the defrosting operation, the switching operation of the flow switching device 3 is performed. At this time, both liquid refrigerant accumulated in the heat-source-side heat exchanger 4, which operates as a condenser during defrosting, and liquid refrigerant accumulated in the refrigerant pipe 20 return to the suction side of the compressor 2 via the accumulator 5. It should be noted that in the cooling operation, because the liquid refrigerant remains in the pipe and at the use-side heat exchanger 51, heat is removed from the liquid refrigerant, most of the refrigerant changes into gas refrigerant. Thus, not much surplus refrigerant is accumulated in the main accumulator 105 or the sub-accumulator 205.

The determination unit 32 determines whether the current operation is the normal operation or the non-normal operation as described above. The determination unit 32 determines that the current operation is the non-normal operation when time measured by the time measuring unit 31 is less than a first time threshold or exceeds a second time threshold. In this case, the first time threshold is set to an arbitrary value and can be changed as appropriate. The controller 30 determines that the operation state of the heat source unit 1 is a state of the heat source unit 1 immediately after the heat source unit 1 has been started, when the time measured by the time measuring unit 31 is less than the first time threshold. The second time threshold is set to time in which frost will form on the heat-source-side heat exchanger 4 in the heating operation such that the probability with which a defrosting operation will be required is high, and can be changed as appropriate. The controller 30 determines that the heat-source-side heat exchanger 4 needs to be defrosted, when the time measured by the time measuring unit 31 exceeds the second time threshold.

The determination unit 32 determines that the current operation is the non-normal operation, when a temperature detected by the heat-source-side temperature detection unit 18 is lower than a temperature threshold. It should be noted that the higher the probability with which the defrosting operation will be required because of formation of frost on the heat-source-side heat exchanger 4, the lower the temperature threshold to be set. The temperature threshold can be changed as appropriate. The controller 30 determines that the heat-source-side heat exchanger 4 needs to be defrosted, when the temperature detected by the heat-source-side temperature detection unit 18 is lower than the temperature threshold.

The determination unit 32 determines that the current operation is the non-normal operation, when an evaporation superheat degree calculated based on the temperature detected by the suction temperature detection unit 14 and the pressure detected by the suction pressure detection unit 13 is less than an evaporation superheat degree threshold. The evaporation superheat degree is obtained by subtracting an evaporating temperature calculated from the pressure detected by the suction pressure detection unit 13, from the temperature detected by the suction temperature detection unit 14. The evaporation superheat degree threshold is set to an evaporation superheat degree at which refrigerant will excessively flow into the heat-source-side heat exchanger 4, which operates as an evaporator, whereby the refrigerant will not easily be superheated. The evaporation superheat degree threshold can be changed as appropriate. The controller 30 determines that refrigerant excessively flows in the heat-source-side heat exchanger 4, when the evaporation superheat degree is less than the evaporation superheat degree threshold.

### (Liquid Equalization Unit 33)

When the determination unit 32 determines that the current operation is the non-normal operation, the liquid equalization unit 33 equalizes the amounts of liquid refrigerant that flows in the heat source units 1. The liquid equalization unit 33 adjusts the flow control valve 6 of one of the heat source units 1 that is determined to be in the non-normal operation by the determination unit 32; that is, one of the heat source units, whose operation is determined to be the non-normal operation by the determination unit 32. Specifically, the liquid equalization unit 33 reduces the opening degree of the flow control valve 6, when the time measured by the time measuring unit 31 exceeds the second time threshold. In addition, the liquid equalization unit 33 reduces the opening degree of the flow control valve 6, when the temperature detected by the heat-source-side temperature detection unit 18 is less than the temperature threshold.

Furthermore, the liquid equalization unit 33 reduces the opening degree of the flow control valve 6, when the evaporation superheat degree calculated based on the temperature detected by the suction temperature detection unit 14 and the pressure detected by the suction pressure detection unit 13 is less than the evaporation superheat degree threshold. Because of reduction of the opening degree of the flow control valve 6, refrigerant does not easily flow into a heat-source-side heat exchanger 4 whose evaporation performance lowers because of formation of frost, and refrigerant easily flows into a heat-source-side heat exchanger 4 on which no frost is formed. Therefore, the air-conditioning capacity of the air-conditioning apparatus 100 is not reduced.

### (Operation Modes)

Next, operation modes of the air-conditioning apparatus 100 will be described. As described above, the air-conditioning apparatus 100 has the cooling only operation mode, the heating only operation mode, and the defrosting operation mode, as the operation modes. In the cooling only operation, in the main heat source unit 101, refrigerant flows in the main compressor 102, the main flow switching device 103, the main heat-source-side heat exchanger 104, and the main flow control valve 106 in this order. Then, in each of the use-side loads 50, the refrigerant flows in the use-side expansion unit 52 and the use-side heat exchanger 51 in this order, and at the use-side heat exchanger 51, heat exchange is performed between indoor air and the refrigerant, whereby the use-side loads 50 is cooled.

Then, the refrigerant is made to branch off to flow into the main heat source unit 101 and the sub-heat source unit 201. In the main heat source unit 101, the refrigerant flows in the main flow switching device 103 and the main accumulator 105 in this order. In the sub-heat source unit 201, the refrigerant flows in the sub-compressor 202, the sub-flow switching device 203, the sub-heat-source-side heat exchanger 204, and the sub-flow control valve 206 in this order. Then, in each of the use-side loads 50, the refrigerant flows in the use-side expansion unit 52 and the use-side heat exchanger 51 in this order, and at the use-side heat exchanger 51, heat exchange is performed between indoor air and the refrigerant, whereby an associated indoor space is cooled. Then, the refrigerant is made to branch off to flows into the main heat source unit 101 and the sub-heat source unit 201. In the sub-heat source unit 201, the refrigerant flows in the sub-flow switching device 203 and the sub-accumulator 205 in this order.

In the heating only operation, in the main heat source unit 101, refrigerant flows in the main compressor 102 and the main flow switching device 103 in this order. Then, in each of the use-side loads 50, the refrigerant flows in the use-side heat exchanger 51 and the use-side expansion unit 52 in this order. At the use-side heat exchanger 51, heat exchange is performed between indoor air and the refrigerant, and the use-side load 50 is thus heated. Then, the refrigerant is made to branch off to flow into the main heat source unit 101 and the sub-heat source unit 201. In the main heat source unit 101, the refrigerant flows in the main flow control valve 106, the main heat-source-side heat exchanger 104, the main flow switching device 103, and the main accumulator 105 in this order.

In addition, in the sub-heat source unit 201, the refrigerant flows in the sub-compressor 202 and the sub-flow switching device 203 in this order. Then, in each of the use-side loads 50, the refrigerant flows in the use-side heat exchanger 51 and the use-side expansion unit 52 in this order. At the use-side heat exchanger 51, heat exchange is performed between indoor air and the refrigerant, and the use-side load 50 is thus heated. Then, the refrigerant is made to branch off to flow into the main heat source unit 101 and the sub-heat source unit 201. In the sub-heat source unit 201, the refrigerant flows in the sub-flow control valve 206, the sub-heat-source-side heat exchanger 204, the sub-flow switching device 203, and the sub-accumulator 205 in this order.

In the defrosting operation, in the main heat source unit 101, refrigerant flows in the main compressor 102, the main flow switching device 103, the main heat-source-side heat exchanger 104, and the main flow control valve 106 in this order. When high-temperature refrigerant discharged from the main compressor 102 flows in the main heat-source-side heat exchanger 104, frost formed on the main heat-source-side heat exchanger 104 is removed. Then, in each of the use-side loads 50, the refrigerant flows in the use-side expansion unit 52 and the use-side heat exchanger 51 in this order.

Then, the refrigerant is made to branch off to flow into the main heat source unit 101 and the sub-heat source unit 201. In the main heat source unit 101, the refrigerant flows in the main flow switching device 103 and the main accumulator 105 in this order. In addition, in the sub-heat source unit 201, the refrigerant flows in the sub-compressor 202, the sub-flow switching device 203, the sub-heat-source-side heat exchanger 204, and the sub-flow control valve 206 in this order. When high-temperature refrigerant discharged from the sub-compressor 202 flows in the sub-heat-source-side heat exchanger 204, frost formed on the sub-heat-source-side heat exchanger 204 is removed. Then, in each of the use-side loads 50, the refrigerant flows in the use-side expansion unit 52 and the use-side heat exchanger 51 in this order. Then, the refrigerant is made to branch off to flow into the main heat source unit 101 and the sub-heat source unit 201. In the sub-heat source unit 201, the refrigerant flows in the sub-flow switching device 203 and the sub-accumulator 205 in this order.

### (Cooling Only Operation)

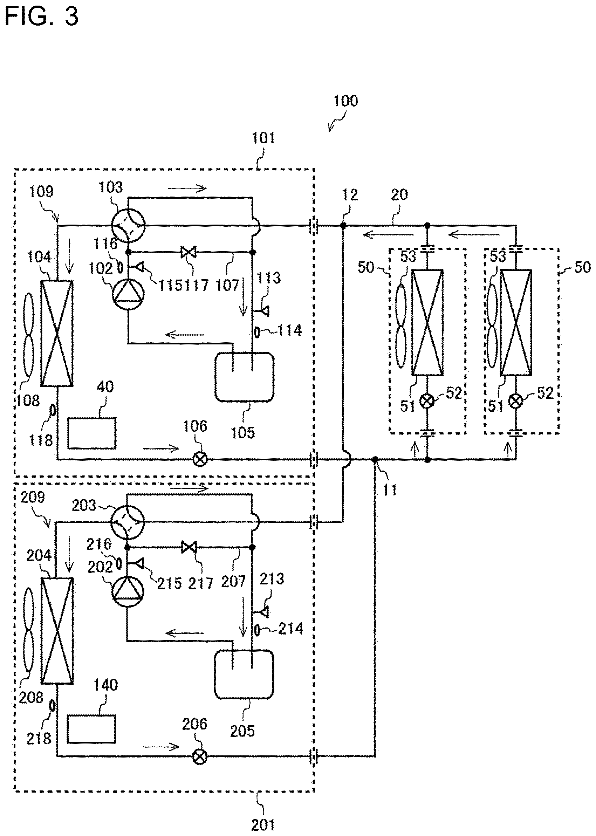

Fig. 3 is a circuit diagram illustrating the flow of refrigerant in the cooling only operation of the air-conditioning apparatus 100 according to Embodiment 1. Next, the operation of the air-conditioning apparatus 100 in each of the operation modes will be described. First of all, the cooling only operation will be described. In the cooling only operation, in the main heat source unit 101, a discharge side of the main compressor 102 and the main heat-source-side heat exchanger 104 are connected by the main flow switching device 103. As indicated by solid arrows in Fig. 3, in the cooling only operation, refrigerant sucked into the main compressor 102 is compressed by the main compressor 102 and discharged as high-temperature and high-pressure gas refrigerant. The high-temperature and high-pressure gas refrigerant discharged from the main compressor 102 passes through the main flow switching device 103 and flows into the main heat-source-side heat exchanger 104, which operates as a condenser. At the main heat-source-side heat exchanger 104, the refrigerant exchanges heat with indoor air supplied by the main heat-source-side fan 108 to condense and liquefy, that is, change into condensed liquid refrigerant. The condensed liquid refrigerant passes through the main flow control valve 106 and reaches the liquid-side junction 11.

In the sub-heat source unit 201, a discharge side of the sub-compressor 202 and the sub-heat-source-side heat exchanger 204 is connected by the sub-flow switching device 203. As indicated by solid arrows in Fig. 3, in the cooling only operation, refrigerant sucked into the sub-compressor 202 is compressed by the compressor 202 and discharged as high-temperature and high-pressure gas refrigerant. The high-temperature and high-pressure gas refrigerant discharged from the sub-compressor 202 passes through the sub-flow switching device 203 and flows into the sub-heat-source-side heat exchanger 204, which operates as a condenser. In the sub-heat-source-side heat exchanger 204, the refrigerant exchanges heat with indoor air supplied by the sub-heat-source-side fan 208 to condense and liquefy, that is, to change into condensed liquid refrigerant. The condensed liquid refrigerant passes through the sub-flow control valve 206 and reaches the liquid-side junction 11.

The refrigerant that has passed through the main flow control valve 106 and the refrigerant that has passed through the sub-flow control valve 206 join each other at the liquid-side junction 11 and flow into the use-side loads 50. In each of the use-side loads 50, the refrigerant flows into the use-side expansion unit 52, and is expanded and reduced in pressure to change into low-temperature and low-pressure two-phase gas-liquid refrigerant. Then, the two-phase gas-liquid refrigerant flows into the use-side heat exchanger 51, which operates as an evaporator, and exchanges heat with indoor air supplied by the use-side fan 53 to evaporated and gasify, that is, to change into evaporated low-temperature and low-pressure gas refrigerant. At this time, the indoor air is cooled and cooling is performed in an associated indoor space. The evaporated low-temperature and low-pressure gas refrigerant reaches the gas-side junction 12. At the gas-side junction 12, the refrigerant is made to branch off and flows into the main heat source unit 101 and the sub-heat source unit 201.

The refrigerant that has flowed into the main heat source unit 101 passes through the main flow switching device 103 and flows into the main accumulator 105. Of the refrigerant that has flowed into the main accumulator 105, liquid refrigerant is stored in the main accumulator 105, and gas refrigerant is sucked into the main compressor 102. On the other hand, the refrigerant that has flowed into the sub-heat source unit 201 passes through the sub-flow switching device 203 and flows into the sub-accumulator 205. Of the refrigerant that has flowed into the sub-accumulator 205, liquid refrigerant is stored in the sub-accumulator 205, and gas refrigerant is sucked into the sub-compressor 202.

### (Heating Only Operation)

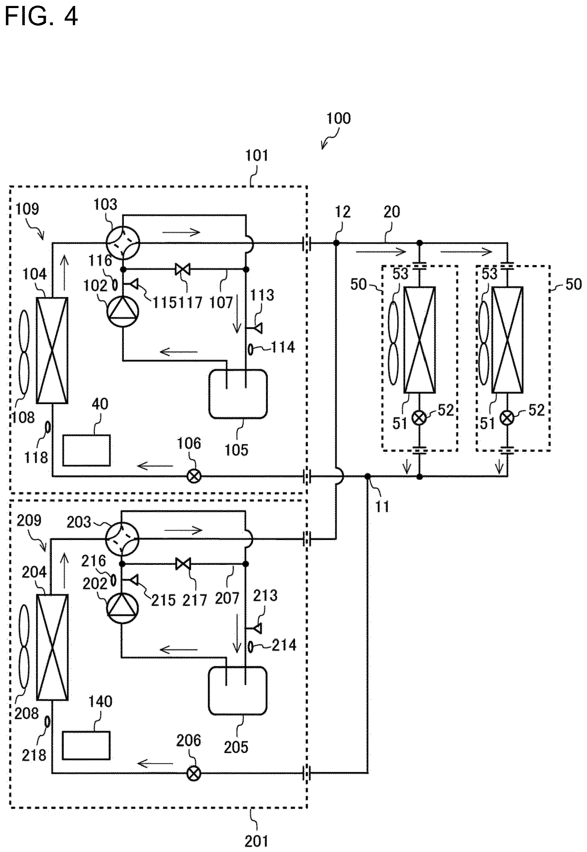

Fig. 4 is a circuit diagram illustrating the flow of refrigerant in the heating only operation of the air-conditioning apparatus 100 according to Embodiment 1. Next, the heating only operation will be described. In the heating only operation, in the main heat source unit 101, the discharge side of the main compressor 102 and the use-side heat exchangers 51 are connected by the main flow switching device 103. As indicated by solid arrows in Fig. 4, in the heating only operation, refrigerant sucked into the main compressor 102 is compressed by the compressor 102 and discharged as high-temperature and high-pressure gas refrigerant. The high-temperature and high-pressure gas refrigerant discharged from the main compressor 102 passes through the main flow switching device 103 and reaches the gas-side junction 12. On the other hand, in the sub-heat source unit 201, the discharge side of the sub-compressor 202 and the use-side heat exchangers 51 are connected by the sub-flow switching device 203. As indicated by solid arrows in Fig. 4, in the heating only operation, refrigerant sucked into the sub-compressor 202 is compressed by the sub-compressor 202 and discharged as high-temperature and high-pressure gas refrigerant. The high-temperature and high-pressure gas refrigerant discharged from the sub-compressor 202 passes through the sub-flow switching device 203 and reaches the gas-side junction 12.

The refrigerant that has passed through the main flow switching device 103 and the refrigerant that has passed through the sub-flow switching device 203 join each other at the gas-side junction 12 and then flow into the use-side loads 50. In each of the use-side loads 50, the refrigerant flows into the use-side heat exchanger 51, which operates as a condenser, and exchanges heat with indoor air supplied by the use-side fan 53 to condense and liquefy, that is, to change into condensed liquid refrigerant. At this time, the indoor air is heated and heating is performed in the associated indoor space. In each of the use-side expansion unit 52, the condensed liquid refrigerant is expanded and reduced in pressure to change into low-temperature and low-pressure two-phase gas-liquid refrigerant. The low-temperature and low-pressure two-phase gas-liquid refrigerant reaches the liquid-side junction 11. At the liquid-side junction 11, the low-temperature and low-pressure two-phase gas-liquid refrigerant is made to branch off and flows into the main heat source unit 101 and the sub-heat source unit 201.

The low-temperature and low-pressure two-phase gas-liquid refrigerant that has flowed into the main heat source unit 101 passes through the main flow control valve 106 and flows into the main heat-source-side heat exchanger 104, which operates as an evaporator. In the main heat-source-side heat exchanger 104, the low-temperature and low-pressure two-phase gas-liquid refrigerant exchanges heat with outdoor air supplied by the main heat-source-side fan 108 to evaporate and gasify, that is, to change into evaporated low-temperature and low-pressure gas refrigerant. The evaporated low-temperature and low-pressure gas refrigerant passes through the main flow switching device 103 and flows into the main accumulator 105. Of the refrigerant that has flowed into the main accumulator 105, liquid refrigerant is stored in the main accumulator 105, and gas refrigerant is sucked into the main compressor 102. On the other hand, the low-temperature and low-pressure two-phase gas-liquid refrigerant that has flowed into the sub-heat source unit 201 passes through the sub-flow control valve 206 and flows into the sub-heat-source-side heat exchanger 204, which operates as an evaporator. In the sub-heat-source-side heat exchanger 204, the low-temperature and low-pressure two-phase gas-liquid refrigerant exchanges heat with outdoor air supplied by the sub-heat-source-side fan 208 to evaporate and gasify, that is, to change into evaporated low-temperature and low-pressure gas refrigerant. The evaporated low-temperature and low-pressure gas refrigerant passes through the sub-flow switching device 203 and flows into the sub-accumulator 205. Of the refrigerant that has flowed into the sub-accumulator 205, liquid refrigerant is stored in the sub-accumulator 205, and gas refrigerant is sucked into the sub-compressor 202.

### (Defrosting Operation)

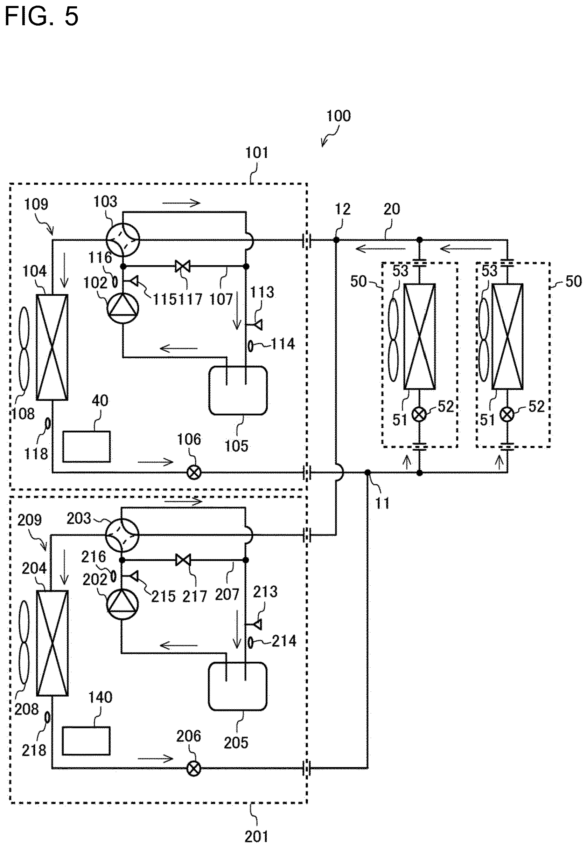

Fig. 5 is a circuit diagram illustrating the flow of refrigerant in the defrosting operation of the air-conditioning apparatus 100 according to Embodiment 1. Next, the defrosting operation will be described. In the defrosting operation, in the main heat source unit 101, the discharge side of the main compressor 102 and the main heat-source-side heat exchanger 104 are connected by the main flow switching device 103. As indicated by solid arrows in Fig. 5, in the defrosting operation, refrigerant sucked into the main compressor 102 is compressed by the main compressor 102 and discharged as high-temperature and high-pressure gas refrigerant. The high-temperature and high-pressure gas refrigerant discharged from the main compressor 102 passes through the main flow switching device 103 and flows into the main heat-source-side heat exchanger 104, which operates as a condenser. At the main heat-source-side heat exchanger 104, the high-temperature and high-pressure gas refrigerant exchanges heat with outdoor air supplied by the main heat-source-side fan 108 to condense and liquefy, that is, to change into condensed high-temperature and high-pressure liquid refrigerant. When the high-temperature and high-pressure refrigerant discharged from the main compressor 102 flows in the main heat-source-side heat exchanger 104, frost formed on the main heat-source-side heat exchanger 104 is removed. The condensed liquid refrigerant passes through the main flow control valve 106 and reaches the liquid-side junction 11.

On the other hand, in the sub-heat source unit 201, the discharge side of the sub-compressor 202 and the sub-heat-source-side heat exchanger 204 are connected by the sub-flow switching device 203. As indicated by solid arrows in Fig. 5, in the defrosting operation, refrigerant sucked into the sub-compressor 202 is compressed by the sub-compressor 202 and discharged as high-temperature and high-pressure gas refrigerant. The high-temperature and high-pressure gas refrigerant discharged from the sub-compressor 202 passes through the sub-flow switching device 203 and flows into the sub-heat-source-side heat exchanger 204, which operates as a condenser. At the sub-heat-source-side heat exchanger 204, the high-temperature and high-pressure gas refrigerant exchanges heat with outdoor air supplied by the sub-heat-source-side fan 208 to condense and liquefy, that is, to change into condensed high-temperature and high-pressure liquid refrigerant. When the high-temperature and high-pressure gas refrigerant discharged from the main sub-compressor 202 flows in the sub-heat-source-side heat exchanger 204, frost formed on the sub-heat-source-side heat exchanger 204 is removed. The condensed liquid refrigerant passes through the sub-flow control valve 206 and reaches the liquid-side junction 11.

The refrigerant that has passed through the main flow control valve 106 and the refrigerant that has passed through the sub-flow control valve 206 join each other at the liquid-side junction 11 and flow into the use-side loads 50. In each of the use-side loads 50, the refrigerant flows into the use-side expansion unit 52, and is expanded and reduced in pressure to change into low-temperature and low-pressure two-phase gas-liquid refrigerant. Then, the low-temperature and low-pressure two-phase gas-liquid refrigerant flows into the use-side heat exchanger 51, which operates as an evaporator, and exchanges heat with indoor air supplied by the use-side fan 53 to evaporate and gasify, that is, to change into evaporated low-temperature and low-pressure gas refrigerant. The evaporated low-temperature and low-pressure gas refrigerant reaches the gas-side junction 12. At the gas-side junction 12, the refrigerant is made to branch off and flows into the main heat source unit 101 and the sub-heat source unit 201.

The refrigerant that has flowed into the main heat source unit 101 passes through the main flow switching device 103 and flows into the main accumulator 105. Of the refrigerant that has flowed into the main accumulator 105, liquid refrigerant is stored in the main accumulator 105, and gas refrigerant is sucked into the main compressor 102. On the other hand, the refrigerant that has flowed into the sub-heat source unit 201 passes through the sub-flow switching device 203 and flows into the sub-accumulator 205. Of the refrigerant that has flowed into the sub-accumulator 205, liquid refrigerant is stored in the sub-accumulator 205, and gas refrigerant is sucked into the sub-compressor 202.

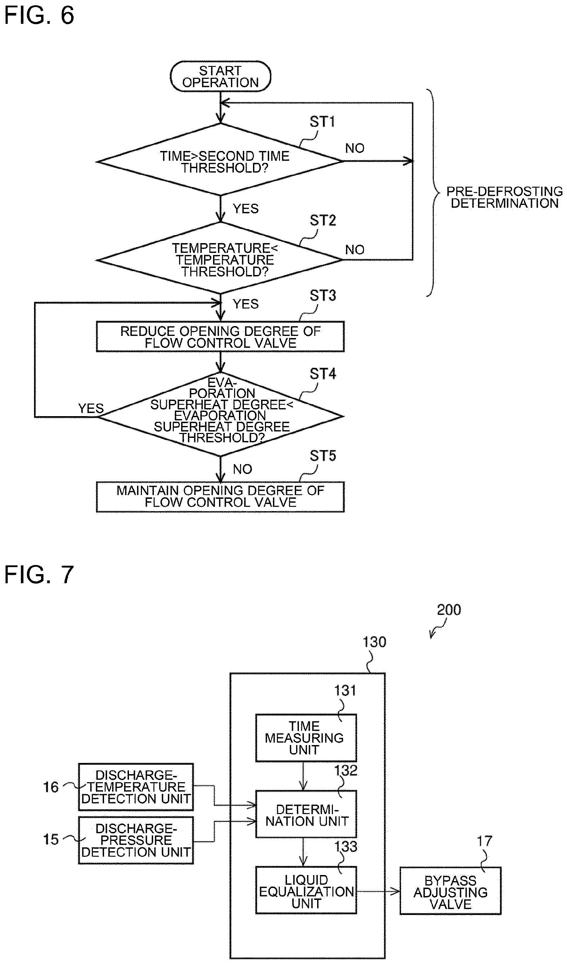

Fig. 6 is a flowchart indicating an operation of the controller 30 of the air-conditioning apparatus 100 according to Embodiment 1. Next, the operation of the controller 30 of the air-conditioning apparatus 100 will be described. As indicated in Fig. 6, when the air-conditioning apparatus 100 starts the heating operation, the determination unit 32 determines whether time measured by the time measuring unit 31 exceeds the second time threshold in one of the heat source units 1 or not (step ST1).

When the time measured by the time measuring unit 31 is less than the second time threshold (NO in step ST1), the controller 30 determines that not much frost forms on the heat-source-side heat exchanger 4, and the process returns to step ST1. By contrast, when the time measured by the time measuring unit 31 exceeds the second time threshold (YES in step ST1), the controller 30 determines that the heat-source-side heat exchanger 4 needs to be defrosted. Then, the determination unit 32 further determines whether the temperature detected by the heat-source-side temperature detection unit 18 is lower than the temperature threshold or not (step ST2).

When the temperature detected by the heat-source-side temperature detection unit 18 is higher than or equal to the temperature threshold (NO in step ST2), the controller 30 determines that not much frost forms on the heat-source-side heat exchanger 4, and the process returns to step ST1. By contrast, when the temperature detected by the heat-source-side temperature detection unit 18 is lower than the temperature threshold (YES in step ST2), the controller 30 determines that the heat-source-side heat exchanger 4 needs to be defrosted. As described above, the controller 30 performs a two-step determination as a pre-defrosting determination, and determines whether or not the current operation is the non-normal operation based on the result of the determination. Then, the liquid equalization unit 33 adjusts the flow control valve 6 of one of the heat source units 1 that is determined to be in the non-normal operation by the determination unit 32 (step ST3).

By reducing the opening degree of the flow control valve 6, refrigerant is controlled such that the refrigerant does not easily flow into a heat-source-side heat exchanger 4 whose evaporation performance is lowered because of formation of frost thereon, and the refrigerant easily flows into a heat-source-side heat exchanger 4 on which no frost forms. As a result, the air-conditioning capacity of the air-conditioning apparatus 100 is not reduced. Then, the determination unit 32 determines whether the evaporation superheat degree calculated based on the temperature detected by the suction temperature detection unit 14 and the pressure detected by the suction pressure detection unit 13 is less than the evaporation superheat degree threshold or not (step ST4).

When the evaporation superheat degree is less than the evaporation superheat degree threshold (YES in step ST4), the controller 30 determines that refrigerant excessively flows in the heat-source-side heat exchanger 4, and the process returns to step ST3. Then, the liquid equalization unit 33 reduces the opening degree of the flow control valve 6 of one of the heat source units 1 that is determined to be in the non-normal operation by the determination unit 32. By reducing the opening degree of the flow control valve 6, refrigerant is controlled such that the refrigerant does not easily flow into the heat-source-side heat exchanger 4 whose evaporation performance is lowered because of formation of frost thereon, and the refrigerant easily flows into the heat-source-side heat exchanger 4 on which no frost forms. By contrast, when the evaporation superheat degree is higher than or equal to the evaporation superheat degree threshold (NO in step ST4), the controller 30 determines that refrigerant does not excessively flow in the heat-source-side heat exchanger 4. That is, the controller 30 determines that the amount of liquid refrigerant that flows in the main heat source unit 101 and the amount of liquid refrigerant that flows in the sub-heat source unit 201 balance each other. Thus, the liquid equalization unit 33 maintains the opening degree of the flow control valve 6 (step ST5).

According to Embodiment 1, when it is determined that the current operation is the non-normal operation, the amounts of liquid refrigerant that flows in the plurality of heat source units 1 are equalized. As a result, uneven distribution of the liquid refrigerant to the plurality of heat source units 1 can be prevented even in the non-normal operation. Thus, even in the non-normal operation, backflow of the liquid refrigerant to the compressor 2 can be reduced.

In addition, the controller 30 of Embodiment 1 performs the two-step determination as the pre-defrosting determination, and based on the result of the determination, determines whether the current operation is the non-normal operation or not. Thus, the controller 30 can more accurately determine whether or not the current operation is the non-normal operation or not. Furthermore, the controller 30 reduces the opening degree of the flow control valve 6 once, and then determines whether refrigerant excessively flows in the heat-source-side heat exchanger 4 or not. Based on the result of the determination, the controller 30 determines whether the current operation is the non-normal operation or not. In such a manner, the controller 30 performs a three-step determination to determine whether the current operation is the non-normal operation or not. As a result, it is possible to further reduce the backflow of the liquid refrigerant to the compressor 2.

When refrigerant accumulated in an accumulator overflows due to excessive moisture, backflow of the liquid refrigerant to a compressor occurs and the reliability of the compressor is impaired. Furthermore, when the flow rate of refrigerant is adjusted in each of heat source units based on the degree of superheat as in existing air-conditioning apparatuses, the flow rate of the refrigerant cannot be controlled depending on the variation of the load of the indoor unit side. As a result, the liquid equalization control may be delayed or may takes time. Consequently, all surplus refrigerant may accumulate in one of the heat source units. Therefore, an accumulator of each of the heat source units needs to be formed to have a larger volume than is necessary. By contrast, in Embodiment 1, when it is determined that the current operation is the non-normal operation, the amounts of liquid refrigerant that flows in the plurality of the heat source units 1 are equalized. Therefore, the accumulators 5 do not need to be formed to have a larger diameter.

### Embodiment 2

Fig. 7 is a block diagram illustrating a controller 130 of an air-conditioning apparatus 200 according to Embodiment 2. A function of a determination unit 132 and a function of liquid equalization unit 133 in Embodiment 2 are different from those of Embodiment 1. Regarding Embodiment 2, components that are the same as those of Embodiment 1 will be denoted by the same reference signs, and their descriptions will thus be omitted. Embodiment 2 will be described by referring mainly to the differences between Embodiments 1 and 2.

### (Determination Unit 132)

A determination unit 132 determines whether or not the current operation is a normal operation in which the main heat source unit 101, the sub-heat source unit 201, and the use-side loads 50 perform the heating operation or the cooling operation. As illustrated in Fig. 7, the determination unit 132 determines that the current operation is the non-normal operation, when time measured by a time measuring unit 131 is less than a first time threshold. In this case, the first time threshold is set to an arbitrary value and can be changed as appropriate, as described above. The controller 130 determines that the operation state of the heat source unit 1 is a state of the heat source unit 1 immediately after the heat source unit 1 has been started, when the time measured by the time measuring unit 131 is less than the first time threshold. It should be noted that the determination unit 132 determines that the current operation is the non-normal operation, when the operation state is an operation state immediately after the defrosting operation has been ended.

The determination unit 132 determines that the current operation is the non-normal operation, when the discharge superheat degree calculated based on the temperature detected by the discharge temperature detection unit 16 and the pressure detected by the discharge pressure detection unit 15 is less than a discharge superheat degree threshold. The discharge superheat degree is a difference between the temperature detected by the discharge temperature detection unit 16 and a condensing temperature calculated from the pressure detected by the discharge pressure detection unit 15. The discharge superheat degree threshold is set to a discharge superheat degree at which liquid refrigerant will flow into the suction side of the compressor 2 and thus the refrigerant will not easily be superheated, and can be changed as appropriate. The discharge superheat degree is, for example, 20 degrees C. The controller 130 determines that liquid refrigerant flows in the compressor 2, when the discharge superheat degree is less than the discharge superheat degree threshold.

### (Liquid Equalization Unit 133)

When the determination unit 132 determines that the current operation is the non-normal operation, the liquid equalization unit 133 equalizes the amounts of liquid refrigerant that flows in the plurality of the heat source units 1. The liquid equalization unit 133 adjusts the bypass adjusting valve 17 of one of the heat source units 1 that is determined to be in the non-normal operation by the determination unit 132. To be more specific, the liquid equalization unit 133 opens the bypass adjusting valve 17, when the time measured by the time measuring unit 131 is less than the first time threshold. In addition, the liquid equalization unit 133 opens the bypass adjusting valve 17, when the discharge superheat degree calculated based on the temperature detected by the discharge temperature detection unit 16 and the pressure detected by the discharge pressure detection unit 15 is less than the discharge superheat degree threshold.

When the bypass adjusting valve 17 is opened, part of the refrigerant discharged from the compressor 2 flows into the accumulator 5 via the bypass pipe 7. When high-temperature refrigerant discharged from the compressor 2 flows into the accumulator 5, liquid refrigerant stored in the accumulator 5 is evaporated to change into gas refrigerant. As a result, the liquid refrigerant is not sucked into the compressor 2, and the discharge superheat degree of the refrigerant can be raised. In the main heat source unit 101 and the sub-heat source unit 201, the controller 130 equalizes, by performing the above operation, the amounts of liquid refrigerant that flows in the plurality of heat source units 1.

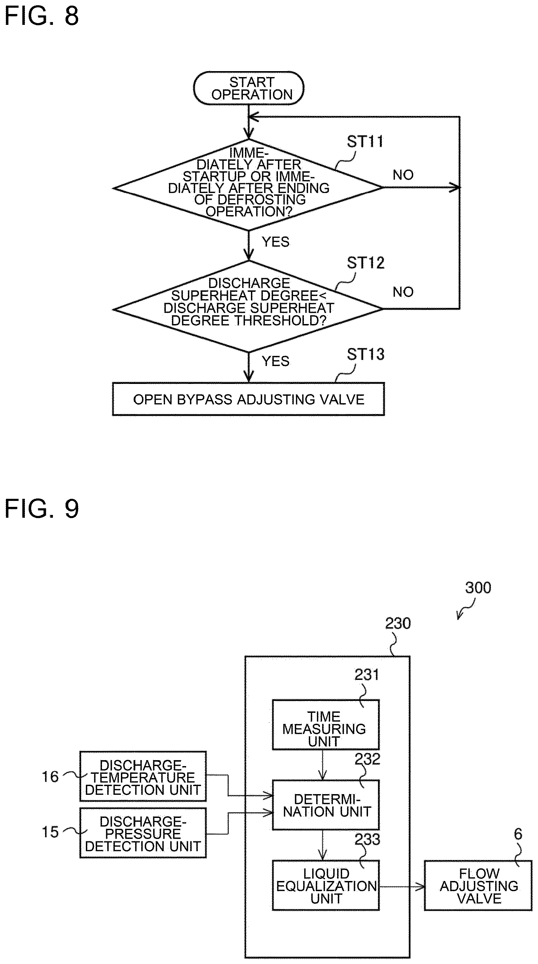

Fig. 8 is a flowchart illustrating the operation of the controller 130 of the air-conditioning apparatus 200 according to Embodiment 2. Next, the operation of the controller 130 of the air-conditioning apparatus 200 will be described. As illustrated in Fig. 8, when the air-conditioning apparatus 200 starts the heating operation, the determination unit 132 determines whether or not time measured by the time measuring unit 131 is less than the first time threshold in any of the heat source units 1. The determination unit 132 also determines whether or not the operation state is an operation state immediately after the defrosting operation has been ended (step ST11).

The controller 130 determines that the operation state of the heat source unit 1 is not an operation state of the heat source unit 1 immediately after the heat source unit 1 has been started, when the time measured by the time measuring unit 131 is longer than or equal to the first time threshold. When the operation state is not an operation state immediately after the defrosting operation has been ended (NO in step ST11), the process returns to step ST11. By contrast, the controller 130 determines that the heat-source-side heat exchanger 4 needs to be defrosted, when the time measured by the time measuring unit 131 is less than the first time threshold. Furthermore, when the operation state is an operation state immediately after the defrosting operation has been ended (YES in step ST11), the process proceeds to step ST12. Then, the determination unit 132 determines whether or not the discharge superheat degree calculated based on the temperature detected by the discharge temperature detection unit 16 and the pressure detected by the discharge pressure detection unit 15 is less than the discharge superheat degree threshold (step ST12).

When the discharge superheat degree is higher than or equal to the discharge superheat degree threshold (NO in step ST12), the controller 130 determines that liquid refrigerant does not flow in the compressor 2, and the process returns to step ST11. By contrast, when the discharge superheat degree is less than the discharge superheat degree threshold (YES in step ST12), the controller 130 determines that the liquid refrigerant flows in the compressor 2. Then, the liquid equalization unit 133 opens the bypass adjusting valve 17 of one of the heat source units 1 that is determined to be in the non-normal operation by the determination unit 132 (step ST13). When the bypass adjusting valve 17 is opened, part of the refrigerant discharged from the compressor 2 flows into the accumulator 5 via the bypass pipe 7. When high-temperature refrigerant discharged from the compressor 2 flows into the accumulator 5, liquid refrigerant stored in the accumulator 5 is evaporated to change into gas refrigerant. As a result, the liquid refrigerant is not sucked into the compressor 2, and the discharge superheat degree of the refrigerant is raised.

According to Embodiment 2, when it is determined that the current operation is the non-normal operation, the amounts of liquid refrigerant that flows in the plurality of heat source units 1 are equalized. As a result, uneven distribution of the liquid refrigerant to the plurality of heat source units can be prevented even in the non-normal operation. Thus, even in the non-normal operation, backflow of the liquid refrigerant to the compressor 2 can be reduced.

Furthermore, the controller 130 of Embodiment 2 determines whether the operation state is an operation state immediately after startup or an operation state immediately after the defrosting operation has been ended, and whether liquid refrigerant flows in the compressor 2. Based on the results of the determination, the controller 130 determines that the current operation is the non-normal operation. As described above, the controller 130 performs a three-step determination to determine whether the current operation is the non-normal operation or not. As a result, the backflow of the liquid refrigerant to the compressor 2 can be further reduced.

### Embodiment 3

Fig. 9 is a block a block diagram illustrating a controller 230 of an air-conditioning apparatus 300 according to Embodiment 3. Functions of a determination unit 232 and a liquid equalization unit 233 in Embodiment 3 are different from those in Embodiments 1 and 2. Regarding Embodiment 3, components which are the same as those of Embodiments 1 and 2 will be denoted by the same reference signs, and their descriptions will thus be omitted. Embodiment 3 will be described by referring mainly to the differences between Embodiment 3 and Embodiments 1 and 2.

### (Determination Unit 232)

The determination unit 232 determines whether or not the current operation is a normal operation in which the main heat source unit 101, the sub-heat source unit 201 and the use-side loads 50 perform the heating operation or the cooling operation. As illustrated in Fig. 9, the determination unit 232 determines that the current operation is the non-normal operation, when time measured by a time measuring unit 231 is less than a first time threshold. In this case, the first time threshold is set to an arbitrary value and can be changed as appropriate, as described above. The controller 230 determines that the operation state is an operation state of the heat source unit 1 immediately after the heat source unit 1 has been started, when the time measured by the time measuring unit 231 is less than the first time threshold. It should be noted that the determination unit 232 determines that the current operation is the non-normal operation, when the operation state is an operation state immediately after the defrosting operation has been ended.

The determination unit 232 determines that the current operation is the non-normal operation, when the discharge superheat degree calculated based on the temperature detected by the discharge temperature detection unit 16 and the pressure detected by the discharge pressure detection unit 15 is less than a discharge superheat degree threshold. The discharge superheat degree is a difference between the temperature detected by the discharge temperature detection unit 16 and a condensing temperature calculated from the pressure detected by the discharge pressure detection unit 15. The discharge superheat degree threshold is set to a discharge superheat degree at which liquid refrigerant will flow into the suction side of the compressor 2 and the refrigerant will not easily be superheated, and can be changed as appropriate. The discharge superheat degree is, for example, 20 degrees C. The controller 230 determines that the liquid refrigerant flows in the compressor 2, when the discharge superheat degree is less than the discharge superheat degree threshold.

### (Liquid Equalization Unit 233)

When the determination unit 232 determines that the operation is the non-normal operation, the liquid equalization unit 233 equalizes the amounts of liquid refrigerant that flows in the plurality of the heat source units 1. The liquid equalization unit 233 adjusts the flow control valve 6 of one of the heat source units 1 that is determined to be in the non-normal operation by the determination unit 232. To be more specific, the liquid equalization unit 233 reduces the opening degree of the flow control valve 6, when the time measured by the time measuring unit 231 exceeds the second time threshold. In addition, the liquid equalization unit 233 reduces the opening degree of the flow control valve 6, when the temperature detected by the heat-source-side temperature detection unit 18 is lower than the temperature threshold.

Also, the liquid equalization unit 233 reduces the opening degree of the flow control valve 6, when the evaporation superheat degree calculated based on the temperature detected by the suction temperature detection unit 14 and the pressure detected by the suction pressure detection unit 13 is less than the evaporation superheat degree threshold. When the opening degree of the flow control valve 6 is reduced, liquid refrigerant does not easily flow into the heat source unit 1, and thus does not easily flow into the compressor 2. As a result, the liquid refrigerant is not sucked into the compressor 2, and the discharge superheat degree of the refrigerant thus rises.

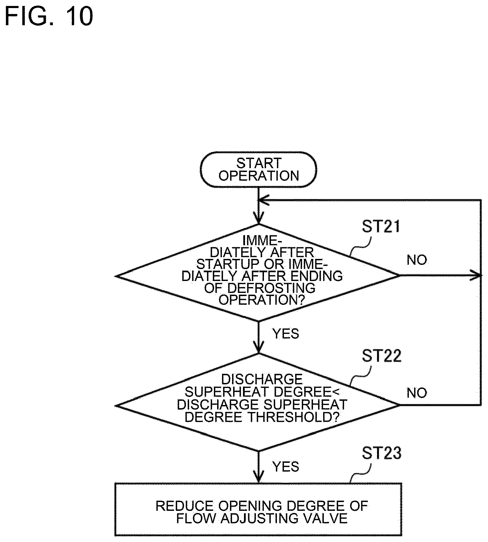

Fig. 10 is a flowchart indicating the operation of the controller 230 of the air-conditioning apparatus 300 according to Embodiment 3. Next, the operation of the controller 230 of the air-conditioning apparatus 300 will be described. As illustrated in Fig. 10, when the air-conditioning apparatus 300 starts the heating operation, in any of the heat source units 1, the determination unit 232 determines whether the time measured by the time measuring unit 231 is less than the first time threshold or not. Furthermore, the determination unit 232 determines whether the current operation state is an operation state immediately after the defrosting operation has been ended (step ST21).

The controller 230 determines that the present operation state of the heat source unit 1 is not an operation state of the heat source unit 1 immediately after the heat source unit 1 has been started, when the time measured by the time measuring unit 231 is longer than or equal to the first time threshold. Furthermore, when the present operation state is not an operation state immediately after the defrosting operation has been ended (NO in step ST21), the process returns to step ST21. By contrast, the controller 230 determines that the heat-source-side heat exchanger 4 needs to be defrosted, when the time measured by the time measuring unit 231 is less than the first time threshold. When the present operation state is an operation state immediately after the defrosting operation has been ended (YES in step ST21), the process proceeds to step ST22. Then, the determination unit 232 determines whether the discharge superheat degree calculated based on the temperature detected by the discharge temperature detection unit 16 and the pressure detected by the discharge pressure detection unit 15 is less than the discharge superheat degree threshold or not (step ST22).

When the discharge superheat degree is higher than or equal to the discharge superheat degree threshold (NO in step ST22), the controller 230 determines that the liquid refrigerant does not flow in the compressor 2, and the process returns to step ST21. By contrast, when the discharge superheat degree is less than the discharge superheat degree threshold (YES in step ST22), the controller 230 determines that the liquid refrigerant flows in the compressor 2. Then, the liquid equalization unit 233 adjusts the flow control valve 6 of one of the heat source units 1 that is determined to be in the non-normal operation by the determination unit 232 (step ST23).

When the opening degree of the flow control valve 6 is reduced, the liquid refrigerant does not easily flow into the heat source unit 1, and thus does not easily flow into the compressor 2. As a result, the liquid refrigerant is not sucked into the compressor 2, and the discharge superheat degree of the refrigerant thus rises.

According to Embodiment 3, when it is determined that the current operation is the non-normal operation, the amounts of liquid refrigerant that flows in the plurality of heat source units 1 are equalized. As a result, uneven distribution of the liquid refrigerant in the plurality of heat source units 1 can be prevented even in the non-normal operation. Thus, even in the non-normal operation, backflow of the liquid refrigerant to the compressor 2 can be reduced.

Furthermore, the controller 230 of Embodiment 3 determines whether the present operation state is an operation state immediately after startup or an operation state immediately after the defrosting operation has been ended, and whether the liquid refrigerant flows in the compressor 2. Based on the results of the determination, the controller 230 determines whether or not the current operation is the non-normal operation. As described above, the controller 230 performs a three-step determination to determine whether the current operation is the non-normal operation. As a result, backflow of the liquid refrigerant to the compressor 2 can be further reduced.

### Reference Signs List

1: heat source unit, 2: compressor, 3: flow switching device, 4: heat-source-side heat exchanger, 5: accumulator, 6: flow control valve, 7: bypass pipe, 8: fan, 11: liquid-side junction, 12: gas-side junction, 13: suction pressure detection unit, 14: suction temperature detection unit, 15: discharge pressure detection unit, 16: discharge temperature detection unit, 17: bypass adjusting valve, 18: heat-source-side temperature detection unit, 20: refrigerant pipe, 30: controller, 31: time measuring unit, 32: determination unit, 33: liquid equalization unit, 40: main controller, 50: use-side load, 51: use-side heat exchanger, 52: use-side expansion unit, 53: use-side fan, 100: air-conditioning apparatus, 101: main heat source unit, 102: main compressor, 103: main flow switching device, 104: main heat-source-side heat exchanger, 105: main accumulator, 106: main flow control valve, 107: main bypass pipe, 108: main heat-source-side fan, 109: main refrigerant circuit, 113: main suction pressure detection unit, 114: main suction temperature detection unit, 115: main discharge pressure detection unit, 116: main discharge temperature detection unit, 117: main bypass adjusting valve, 118: main heat-source-side temperature detection unit, 130: controller, 131: time measuring unit, 132: determination unit, 133: liquid equalization unit, 140: sub-controller, 200: air-conditioning apparatus, 201: sub-heat source unit, 202: sub-compressor, 203: sub-flow switching device, 204: sub-heat-source-side heat exchanger, 205: sub-accumulator, 206: sub-flow control valve, 207: sub-bypass pipe, 208: sub-heat-source-side fan, 209: sub-refrigerant circuit, 213: sub-suction pressure detection unit, 214: sub-suction temperature detection unit, 215: sub-discharge pressure detection unit, 216: sub-discharge temperature detection unit, 217: sub-bypass adjusting valve, 218: sub-heat-source-side temperature detection unit, 230: controller, 231: time measuring unit, 232: determination unit, 233: liquid equalization unit, 300: air-conditioning apparatus

## Claims

1. An air-conditioning apparatus comprising:
a plurality of heat source units (1) each including a compressor (2), a heat-source-side heat exchanger (4), a flow control valve (6), and an accumulator (5);
a use-side load (50) connected to the heat source units (1) by pipes, and including a use-side heat exchanger (51) configured to cause heat exchange to be performed between refrigerant supplied from each of the heat source units (1) and a use-side heat medium;
a controller (30) configured to control an operation of each of the heat source units (1); and
heat-source-side temperature detection units (18) each configured to detect a temperature of refrigerant that flows in the heat-source-side heat exchanger (4) of an associated one of the heat source units (1),
wherein the controller (30) includes
a determination unit (32) configured to determine whether or not a current operation is a non-normal operation in which the heat source units (1) and the use-side load (50) operate in a different manner from that in a heating operation or a cooling operation,
a liquid equalization unit (33) configured to equalize amounts of liquid refrigerant that flows in the heat source units (1), when the determination unit (32) determines that the current operation is the non-normal operation, and
a time measuring unit (31) configured to measure time for which each of the heat source units (1) operates,
the determination unit (32) is configured to determine that the current operation is the non-normal operation, when the time measured by the time measuring unit (31) is less than a first time threshold or exceeds a second time threshold, or a temperature detected by the heat-source-side temperature detection unit (18) is less than a temperature threshold, and
the liquid equalization unit (33) is configured to adjust the flow control valve (6) of one of the heat source units (1) that is determined to be in the non-normal operation by the determination unit (32).

2. The air-conditioning apparatus of claim 1, further comprising:
suction temperature detection units (14) each configured to detect a temperature of refrigerant that flows into an associated one of the accumulators (5); and
suction pressure detection units (13) each configured to detect a pressure of refrigerant that flows into the associated accumulator (5),
wherein the determination unit (32) is configured to determine that the current operation is the non-normal operation, when an evaporation superheat degree calculated based on the temperature detected by the suction temperature detection unit (14) and the pressure detected by the suction pressure detection unit (13) is less than an evaporation superheat degree threshold.

3. The air-conditioning apparatus of claim 1 or 2, further comprising:
discharge temperature detection units (16) each configured to detect a temperature of refrigerant discharged from an associated one of the compressors (2); and
discharge pressure detection units (15) each configured to detect a pressure of refrigerant discharged from the associated compressor (2),
wherein the determination unit (32) is configured to determine that the current operation is the non-normal operation, when a discharge superheat degree calculated based on the temperature detected by the discharge temperature detection unit (16) and the pressure detected by the discharge pressure detection unit (15) is less than a discharge superheat degree threshold.

4. The air-conditioning apparatus of any one of claims 1 to 3, wherein
the heat source units (1) each include
a bypass pipe (7) that allows refrigerant to flow from a discharge side of the compressor (2) to the accumulator (5), and
a bypass adjusting valve (17) configured to adjust a flow rate of refrigerant that flows in the bypass pipe (7), and
the liquid equalization unit (33) is configured to adjust the bypass adjusting valve (17) of one of the heat source units (1) that is determined to be in the non-normal operation by the determination unit (32).

## Patentansprüche

1. Klimatisierungsvorrichtung, die aufweist:
eine Vielzahl von Wärmequelleneinheiten (1), von denen jede einen Kompressor (2), einen wärmequellenseitigen Wärmetauscher (4), ein Strömungssteuerventil (6) und einen Akkumulator (5) umfasst;
eine gebrauchsseitige Last (50), die mit den Wärmequelleneinheiten (1) durch Rohre verbunden ist und die einen gebrauchsseitigen Wärmetauscher (51) umfasst, der eingerichtet ist, einen Wärmeaustausch zu veranlassen, der zwischen einem Kühlmittel, das von jeder der Wärmequelleneinheiten (1) geliefert wird, und einem gebrauchsseitigen Wärmemedium durchzuführen ist;
eine Steuereinrichtung (30), die eingerichtet ist, einen Betrieb von jeder der Wärmequelleneinheiten (1) zu steuern; und
wärmequellenseitige Temperaturerfassungseinheiten (18), von denen jede eingerichtet ist, eine Temperatur eines Kühlmittels zu erfassen, das in dem wärmequellenseitigen Wärmetauscher (4) einer verknüpften Wärmequelleneinheit der Wärmequelleneinheiten (1) strömt,
wobei die Steuereinrichtung (30) umfasst:
eine Bestimmungseinheit (32), die zum Bestimmen eingerichtet ist, ob ein aktueller Betrieb ein nicht normaler Betrieb, bei dem die Wärmequelleneinheiten (1) und die gebrauchsseitige Last (50) auf eine Weise betrieben werden, die sich von jener bei einem Heizbetrieb oder einem Kühlbetrieb unterscheidet, ist oder nicht,
eine Flüssigkeitsegalisierungseinheit (33), die eingerichtet ist, Mengen eines flüssigen Kühlmittels zu egalisieren, das in den Wärmequelleneinheiten (1) strömt, wenn die Bestimmungseinheit (32) bestimmt, dass der aktuelle Betrieb, der nicht normale Betrieb ist, und
eine Zeitmesseinheit (31), die zum Messen einer Zeit eingerichtet ist, während welcher jede der Wärmequelleneinheiten (1) betrieben wird,
wobei die Bestimmungseinheit (32) eingerichtet ist, zu bestimmen, dass der aktuelle Betrieb der nicht normale Betrieb ist, wenn die Zeit, die durch die Zeitmesseinheit (31) gemessen wird, kleiner als eine erste Zeitschwelle ist oder eine zweite Zeitschwelle übersteigt, oder wenn eine Temperatur, die durch die wärmequellenseitige Temperaturerfassungseinheit (18) erfasst wird, kleiner als eine Temperaturschwelle ist, und
wobei die Flüssigkeitsegalisierungseinheit (33) eingerichtet ist, das Strömungssteuerventil (6) von einer der Wärmequelleneinheiten (1) einzustellen, für die durch die Bestimmungseinheit (32) bestimmt wird, dass sie sich im nicht normalen Betrieb befindet.

2. Klimatisierungsvorrichtung nach Anspruch 1, die ferner aufweist:
Ansaugtemperaturerfassungseinheiten (14), von denen jede eingerichtet ist, eine Temperatur eines Kühlmittels zu erfassen, das in einen verknüpften Akkumulator der Akkumulatoren (5) hineinströmt, und
Ansaugdruckerfassungseinheiten (13), von denen jede eingerichtet ist, einen Druck eines Kühlmittels zu erfassen, das in den verknüpften Akkumulator (5) strömt,
wobei die Bestimmungseinheit (32) eingerichtet ist, zu bestimmen, dass der aktuelle Betrieb der nicht normale Betrieb ist, wenn ein Verdampfungsüberhitzungsgrad, der basierend auf der durch die Ansaugtemperaturerfassungseinheit (14) erfassten Temperatur und auf dem durch die Ansaugdruckerfassungseinheit (13) erfassten Druck berechnet wird, kleiner als eine Verdampfungsüberhitzungsgradschwelle ist.

3. Klimatisierungsvorrichtung nach Anspruch 1 oder 2, die ferner aufweist:
Auslasstemperaturerfassungseinheiten (16), von denen jede eingerichtet ist, eine Temperatur eines Kühlmittels zu erfassen, das aus einem verknüpften Kompressor der Kompressoren (2) ausgelassen wird; und
Auslassdruckerfassungseinheiten (15), von denen jede eingerichtet ist, einen Druck eines Kühlmittels zu erfassen, das aus dem verknüpften Kompressor (2) ausgelassen wird,
wobei die Bestimmungseinheit (32) eingerichtet ist, zu bestimmen, dass der aktuelle Betrieb der nicht normale Betrieb ist, wenn ein Auslassüberhitzungsgrad, der basierend auf der durch die Auslasstemperaturerfassungseinheit (16) erfassten Temperatur und auf dem durch die Auslassdruckerfassungseinheit (15) erfassten Druck berechnet wird, kleiner als eine Auslassüberhitzungsgradschwelle ist.

4. Klimatisierungsvorrichtung nach einem der Ansprüche 1 bis 3, wobei
die Wärmequelleneinheiten (1) jeweils umfassen:
ein Umgehungsrohr (7), das Kühlmittel von einer Auslassseite des Kompressors (2) zum Akkumulator (5) strömen lässt, und
ein Umgehungseinstellventil (17), das eingerichtet ist, eine Strömungsrate eines Kühlmittels einzustellen, das in dem Umgehungsrohr (7) strömt, und
wobei die Flüssigkeitsegalisierungseinheit (33) eingerichtet ist, das Umgehungseinstellventil (17) von einer der Wärmequelleneinheiten (1) einzustellen, für die durch die Bestimmungseinheit (32) bestimmt wird, dass sie sich im nicht normalen Betrieb befindet.

## Revendications

1. Appareil de climatisation comprenant :
une pluralité d'unités de source de chaleur (1) comprenant chacune un compresseur (2), un échangeur de chaleur côté source de chaleur (4), une soupape de régulation de débit (6) et un accumulateur (5) ;
une charge côté utilisation (50) raccordée aux unités de source de chaleur (1) par des tuyaux, et comprenant un échangeur de chaleur côté utilisation (51) configuré pour amener un échange de chaleur à être effectué entre un fluide frigorigène fourni à partir de chacune des unités de source de chaleur (1) et un milieu thermique côté utilisation ;
un dispositif de commande (30) configuré pour commander un fonctionnement de chacune des unités de source de chaleur (1) ; et
des unités de détection de température côté source de chaleur (18) configurées chacune pour détecter une température d'un fluide frigorigène qui circule dans l'échangeur de chaleur côté source de chaleur (4) d'une unité associée parmi les unités de source de chaleur (1),
dans lequel le dispositif de commande (30) comprend
une unité de détermination (32) configurée pour déterminer si un fonctionnement actuel est ou non un fonctionnement non normal dans lequel les unités de source de chaleur (1) et la charge côté utilisation (50) fonctionnent d'une manière différente de celle dans un fonctionnement de chauffage ou un fonctionnement de refroidissement,
une unité d'égalisation de liquide (33) configurée pour égaliser des quantités d'un fluide frigorigène liquide qui circule dans les unités de source de chaleur (1), lorsque l'unité de détermination (32) détermine que le fonctionnement en cours est le fonctionnement non normal, et
une unité de mesure du temps (31) configurée pour mesurer le temps pendant lequel chacune des unités de source de chaleur (1) fonctionne,
l'unité de détermination (32) est configurée pour déterminer que le fonctionnement en cours est le fonctionnement non normal, lorsque le temps mesuré par l'unité de mesure du temps (31) est inférieur à un premier seuil de temps ou dépasse un second seuil de temps, ou une température détectée par l'unité de détection de température côté source de chaleur (18) est inférieure à un seuil de température, et
l'unité d'égalisation de liquide (33) est configurée pour ajuster la soupape de régulation de débit (6) de l'une des unités de source de chaleur (1) qui est déterminée comme étant dans le fonctionnement non normal par l'unité de détermination (32).

2. Appareil de climatisation selon la revendication 1, comprenant en outre :
des unités de détection de température d'aspiration (14) configurées chacune pour détecter une température de fluide frigorigène qui circule dans un accumulateur associé parmi les accumulateurs (5) ; et
des unités de détection de pression d'aspiration (13) configurées chacune pour détecter une pression de fluide frigorigène qui circule dans l'accumulateur associé (5),
dans lequel l'unité de détermination (32) est configurée pour déterminer que le fonctionnement en cours est le fonctionnement non normal, lorsqu'un degré de surchauffe d'évaporation calculé en fonction de la température détectée par l'unité de détection de température d'aspiration (14) et de la pression détectée par l'unité de détection de pression d'aspiration (13) est inférieur à un seuil de degré de surchauffe d'évaporation.

3. Appareil de climatisation selon la revendication 1 ou 2, comprenant en outre :
des unités de détection de température d'évacuation (16) configurées chacune pour détecter une température d'un fluide frigorigène évacué depuis un compresseur associé parmi les compresseurs (2) ; et
des unités de détection de pression d'évacuation (15) configurées chacune pour détecter une pression d'un fluide frigorigène évacué depuis le compresseur associé (2),
dans lequel l'unité de détermination (32) est configurée pour déterminer que le fonctionnement en cours est le fonctionnement non normal, lorsqu'un degré de surchauffe d'évacuation calculé en fonction de la température détectée par l'unité de détection de température d'évacuation (16) et de la pression détectée par l'unité de détection de pression d'évacuation (15) est inférieur à un seuil de degré de surchauffe d'évacuation.

4. Appareil de climatisation selon l'une quelconque des revendications 1 à 3, dans lequel
les unités de source de chaleur (1) comprennent chacune
un tuyau de dérivation (7) qui permet que le fluide frigorigène circule depuis un côté évacuation du compresseur (2) vers l'accumulateur (5), et
une soupape de réglage de dérivation (17) configurée pour régler un débit du fluide frigorigène qui circule dans le tuyau de dérivation (7), et
l'unité d'égalisation de liquide (33) est configurée pour régler la soupape de réglage de dérivation (17) de l'une des unités de source de chaleur (1) qui est déterminée comme étant dans le fonctionnement non normal par l'unité de détermination (32).
